# EUROPEAN PATENT APPLICATION

(11) **EP 2 774 924 A1**
(43) Date of publication of application: **10.09.2014**
(21) Application number: 13152982.8
(22) Date of filing: 29.01.2013
(51) Int. Cl.: C07D 307/89, C08K 5/1539, C08K 5/3412, C08K 5/3417, C08K 5/378

(54) **New compositions, cross-linkable rubber mixtures containing these compositions, process for their production and their use**

(71) Applicant: Rhein Chemie Rheinau GmbH, 68219 Mannheim (DE)
(72) Inventor: Säwe, Martin, Wellington Woods Drive, 2021 (US); Oprisoni, Cristian, 68219 Mannheim (DE)
(74) Representative: Siegers, Britta

(57) **Abstract**

The present invention relates to new compositions, cross-linkable rubber mixtures containing these compositions, processes for their production and their use in automotive applications, as retarder, especially to reduce Mooney viscosity, extend the incubation time and improve the reinforcement factor.

## Description

The present invention relates to new compositions, cross-linkable rubber mixtures containing these compositions, processes for their production and their use in automotive applications, especially to reduce the Mooney viscosity, extend the incubation time and improve the reinforcement factor.

When producing elastomer compositions for rubber articles, such as tires, air springs and the like, it is a prerequisite that these compositions are easy to process and display stable crosslinking kinetics during the vulcanization process. If the aforementioned compositions contain fillers, such as silica or carbon black, it is expected that they be well dispersed through the rubber composition in order to have a visible improvement of Mooney viscosity, tensile properties and dynamic properties.

Filler dispersions in rubber compositions have become a major concern since the introduction of silica as reinforcing filler. Due to the fact that polar silanol groups on the silica surface tend to associate by forming hydrogen bonds, re-agglomeration of silica particles occurs after compounding leading to high compound viscosity and poor physical properties.

The current state of the art regarding diene rubber compositions containing large amounts of reinforcing fillers, for example silica, requires that a coupling agent, a so called bifunctional silane, is used to provide chemical bonds between the polymeric chain and the inorganic polar silica via the hydroxyl groups of the latter. The bifunctional silane usually has one moiety (alcoxysilyl) that reacts with the hydroxyl groups of the silica surface and another moiety (e.g. mercapto, vinyl, amino, etc) that reacts with the rubber. Of these silanes good properties (tensile properties) are shown by those containing mercapto moieties, the so called mercaptosilanes.

However, precisely the mercapto groups (i.e. their high reactivity) confer these silanes their disadvantageous side as they interfere with the cross linking reaction. This implies firstly an increased Mooney viscosity of the mixture prior to vulcanization, which means the flowability of the mix might be impaired resulting in defects in the final product. Secondly, it accelerates the vulcanization of the rubber mix i.e. the incubation time (the time from the moment heat is applied to the sample until the actual crosslinking reaction starts - this is relevant for the shape of the final product obtained for example by compression molding) is rather short. Lastly, it may happen that due to the short incubation time the physical properties are also negatively affected. DE-A-102008037593 discloses a solution to the reduced scorch time of a mercaptosilane containing silica tread mixes containing a blend of NR, BR and SBR. A substituted 2-Mercapto-Benzothiazole-Sulfenamide was used to address the issue. One disadvantage is the necessity of a guanidine (DPG) in the crosslinking system which forms hazardous nitrosamines and, when added in the first mixing stage, can interact with the silica-silane reaction leading to changes of the dispersion and physical properties.

In US-A-2006199885 a silica reinforced tire compound is used where longer incubation times were obtained when treating the silica with an alcoxysilane-mercaptosilane mixed with a strong base (DBU). An extra processing step is herein required possibly increasing the final price of the composition.

An object of the present invention therefore was to provide easy processable, guanidine-free new compositions, which can be_used as retarders in automotive applications. They should induce properties such as low Mooney viscosity, an extended incubation time and physical properties (i.e. reinforcing factor) similar or improved in rubber goods such as tires and/or air springs.

Surprisingly it could be found that the object of the present invention could be solved by compositions comprising at least one dicaprolactam polysulfide and at least one component according to formula (II) 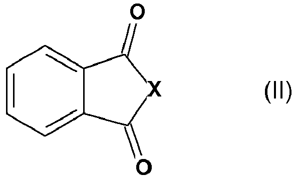 wherein X= O or N-S-R and R represents an C₁ - C₆- alkyl-, C₆ - C₁₂ - cycloalkyl-residue or -C(H)ₙYₘ with the proviso that n+m = 3, wherein Y = F, Cl or Br preferably Cl, or C₁ - C₆- alkyl.

The present invention therefore provides compositions comprising at least one dicaprolactam polysulfide according to formula (I) 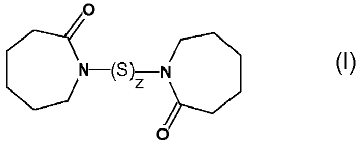 with z = 2-8, preferably 2,
and at least one component according to formula (II) 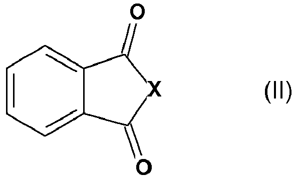 wherein X= O or N-S-R and R represents an C₁ - C₆- alkyl-, C₆ - C₁₂ - cycloalkyl-residues or -C(H)ₙYₘ with the proviso that n+m = 3, wherein Y = F, Cl or Br, preferably C₁, or C₁ - C₆- alkyl. In one embodiment of the invention the C₆ - C₁₂ - cycloalkyl-residue is substituted with one or more C₁ - C₆- alkyl or halogens such as F, Cl and/or Br.

In a preferred embodiment of the invention the dicaprolactam disulfide (CLD) according to formula (I) is

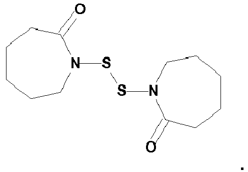

In another preferred embodiment of the invention in the component according to formula (II) X= O, which is especially preferred if used in combination with CLD.

In another preferred embodiment of the invention a component according to formula (II) with X= N-S-R and R represent cycloalkyl or-C(Cl)₃ is used, which is especially preferred if used in combination with CLD.

The compound according to formula (I) is commercially available e.g. at RheinChemie Rheinau GmbH as Rhenocure® S.

The compounds according to formula (II) are commercially available, e.g. at Lanxess Deutschland GmbH as Vulkalent® B/C, Vulkalent® E/C, Vulkalent® G.

In a preferred embodiment of the invention the ratio of dicaprolactam polysulfide according to formula (I) to the component according to formula (II) is 10: 1 to 1 : 10, preferably 1:1.

The compounds according to the invention are prepared by mixing dicaprolactam polysulfide according to formula (I) to the component according to formula (II) or component according to formula (II) with dicaprolactam polysulfide according to formula (I) preferably at temperatures from 0 to 80 °C. The mixing can be done in regular powder mixers, such as the ones produced by Plasmec.

In a preferred embodiment of the invention the compositions according to the invention are bound on a polymer (polymer-bound).

As polymer the following materials are preferred:
- Cross linkable diene rubbers, preferably natural rubber (NR), isoprene rubber (IR), styrene-butadiene rubber (SBR), butadiene rubber (BR), isoprene-isobutylene rubber (IIR) and ethylene-propylene-diene rubber (EPDM) as well as
- Further cross linkable rubbers, preferably polychloroprene rubber (CR), acrylonitrile-butadiene rubber (NBR), hydrogenated acrylonitrile-butadiene rubber (HNBR), carboxylated acrylonitrile-butadiene rubber (XNBR), hydrogenated carboxylated acrylonitrile-butadiene rubber (HXNBR), ethylene-propylene rubber (EPM), fluorine rubber (FKM), perfluorinated fluorine rubber (FFKM), acrylate-ethylene rubber (AEM), acrylate rubber (ACM), chlorinated polyethylene, chlorosulphonated polyethylene, ethylene-vinyl acetate rubber (EVA), silicon rubber, flurosilicone rubber, ethylene-epichlorohydrin rubber (ECO), epichlorohydrin rubber (CO) or polyurethane rubber (PU).

The amount of polymer is preferably 5 to 90 wt.%, preferably 20 to 70 wt%.

The polymer-bound compounds according to the invention are prepared by mixing dicaprolactam polysulfide according to formula (I) to the component according to formula (II) or component according to formula (II) with the dicaprolactam polysulfide according to formula (I) preferably at temperature from 20 to 100 °C, preferably 40 to 80°C into the polymer. The mixing can be done in regular internal mixers, such as the ones from Brabender with Banbury tangential rotors.

In another preferred embodiment of the invention the compositions according to the invention are applied on a carrier (carrier-based composition).

The carrier is preferably an inorganic compound in a powder form, more preferred inactive silica.

The amount of carrier substance is preferably 5 to 95 wt.%, preferably 10 to 80 wt.%.

The carrier-based compositions according to the invention are prepared by mixing dicaprolactam polysulfide to component according to formula (II) or component according to formula (II) with dicaprolactam polysulfide preferably at temperatures from 20 to 100 °C, preferably 40 to 80°C with the carrier. The mixing can be done in regular powder mixers, such as the ones produced by Plasmec.

Another object of the present invention are rubber mixtures containing at least
A) A cross-linkable diene rubber, preferably sulfur vulcanizable rubber,
B) Coupling agent, preferably silanes, preferably mercaptosilanes,
C) Cross-linking agent, preferably sulfur,
D) Accelerator,
E) Cross-linking activators, preferably zinc oxide and stearic acid and
F) A composition comprising at least one dicaprolactam polysulfide according to formula (1) 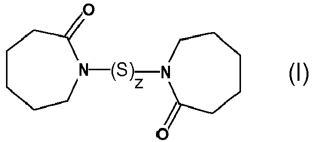 with z = 2-8, preferably 2,
   and at least one component according to formula (II) 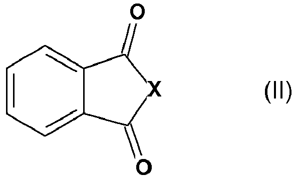 wherein X= O or N-S-R and R represents an C₁-C₆-alkyl-, C₆-C₁₂-cycloalkyl-residue or -C(H)ₙYₘ with the proviso that n+m = 3, wherein Y = F, Cl or Br, preferably Cl, or C₁- C₆-alkyl. In one embodiment of the invention the C₆-C₁₂-cycloalkyl-residue is substituted with one or more C₁-C₆-alkyl or halogens such as F, Cl, Br.

In another preferred embodiment of the invention the rubber further contains inorganic filler, preferably silica (silica-based) (G) or a mixture of silica and carbon black. Examples of suitable silica reinforcing filler include but are not limited to precipitated amorphous silica, wet silica, dry silica, fumed silica and the like. Among these precipitated wet-based amorphous wet-process hydrated silicas are preferred. The surface area measured with the BET method gives a measure of the reinforcing character of different fillers. The silicas of interest for the current invention should have an area of about 32 m²/g to 410 m²/g preferably 105 m²/g to 260 m²/g most preferably 140 m²/g to 221 m²/g. Such silicas are commercially available from, for example Evonik Degussa GmbH.

In the rubber mixture according to the invention natural rubber (NR), isoprene rubber (IR), styrene-butadiene rubber (SBR), butadiene rubber (BR), isoprene-isobutylene rubber (IIR) and/or ethylene-propylene-diene rubber (EPDM) and/or blends thereof, preferably styrene-butadiene rubber (SBR) and/or natural rubber (NR), are used as cross-linkable diene rubber (A). These rubbers are commercially available from Lanxess Deutschland GmbH.

As mercaptosilanes (B) silanes containing free and/or blocked mercapto groups and/or their condensation products can be used while substances according to formulas (p) 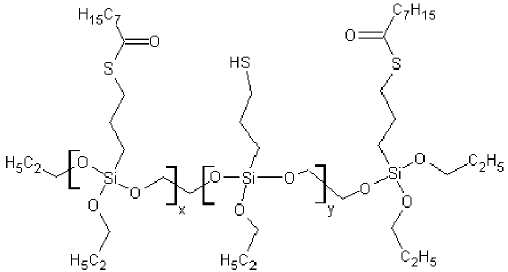 (p) with 0≤x≤19, 0≤y≤20 and formula (r) 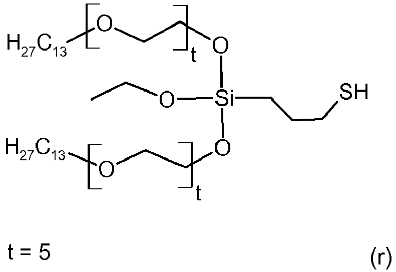 (p) and (r) are most preferred. These mercaptosilanes are commercially available from Momentive Performance Material Inc.; (p) as Silane NXT Z and from Evonik Degussa GmbH and (r) as Silan VP Si 363.

In the rubber mixture according to the invention sulfur is used as a cross-linking agent (C). As sulfur soluble and/or insoluble sulfur is most preferred. The sulfur used is commercially available from Solvay Strontium Barium GmbH.

In the rubber mixture according to the invention sulfenamide based substances, preferably benzothiazolesulfenamides, especially preferred N-cyclohexyl-2-benzothiazolesulphenamide (CBS) are used as accelerators D). These accelerators D) are commercially available from Lanxess Deutschland GmbH.

In the rubber mixture according to the invention crosslinking activators E) are used preferably metal oxides such as MgO, PbO, CaO, ZnO, more preferred ZnO, and this preferably in combination with one or more fatty acids such as stearic acid, palmitic acid, linoleic acid, more preferred in combination with stearic acid. The ZnO is commercially available from Grillo GmbH. Stearic acid is commercially available for example from Avokal GmbH.

In the rubber mixture according to the invention as component F) an mixture of component according to formula (II) X= O, in combination with CLD is preferred.

In another preferred embodiment of the invention a component according to formula (II) with X= N-S-R and R represent cycloalkyl or-C(Cl)₃ in combination with CLD is preferred.

In one preferred embodiment of the invention the rubber mixture also contains plasticizers, such as preferably aromatic, naphthenic and/or paraffinic oils, preferably aromatic oils more preferred treated distillated aromatic extract (TDAE). TDAE is commercially available from Hansen&Rosenthal AG. Typically antioxidants and microcrystalline waxes can also be used such as N-(1,3-dimethylbutyl)-N'-phenyl-p-phenylenediamine (6PPD), poly(2,2,4-trimethyl-1,2-dihydroquinoline) (TMQ). These and other additives are commericially available and their uses are described in Ullmann's Encyclopedia of Industrial Chemistry, Wiley-VCH Verlag GmbH&Co Weinheim, 2007.

In one preferred embodiment of the invention the rubber mixture contains
1 - 20 phr coupling agent (B),
0,5 - 5 phr cross-linking agent (C),
0,1 - 5 phr accelerator (D),
1 - 10 phr cross-linking activators (E) and
0,1 to 5 phr of a mixture of least one dicaprolactam polysulfide according to formula (I) and at least one component according to formula (II) (F),
based on 100 phr cross-linkable diene rubber (A).
Phr has the meaning of parts per hundred rubber.

If the rubber mixture further contains filler (G) it is preferred to use an amount of 50 to 150 phr, more preferred 80 to 100 phr based on 100 phr cross-linkable diene rubber (A).

Another object of the present invention is a process for the production of a rubber mixture according to the invention, characterized in that the components B) to F) are mixed into the cross-linkable diene rubber (A) preferably by using a Banbury type internal mixer, more preferred at temperatures between 30 to 90 °C, more preferred between 50 and 70°C.

It is preferred to start by mixing homogeneously the coupling agent (B) cross-linking activator (E) into the cross-linkable diene rubber (A), and proceed by adding at least one cross-linking agent (C), at least one accelerator (D) and at least a composition according to invention (F) (mixing strategy 1).

For rubber mixtures containing natural rubber (NR) and fillers it is preferred to proceed to use a two steps mixing procedure (mixing strategy 2):
I) mixing in a Banbury type internal mixer, preferably with intermeshing rotors
   1) at least one cross-linkable diene rubber (A),
   2) at least one coupling agent (B),
   3) at least one cross-linking activator (E) and
   4) at least one filler (G) and optionally further additives
   at temperatures from 140°C to about 200°C over a period of 1 to 20 minutes, preferably 150°C to 180°C over a period of about 2 to 10 minutes;
   thereby forming first mixture, which preferably will be stored at a temperature between 15 to 40°C for 5 to 48 hours, preferably 20 to 30 hours,
II) mixing at a temperature of from about 20 to 140°C, preferably 50 to 100°C and adding at least one cross-linking agent (C), at least one accelerator (D) and at least a composition according to invention (F) and
III) shaping the mixture.

For rubber mixtures containing fillers it is preferred to proceed to use a three steps mixing procedure (mixing strategy 3) :
I) mixing in a Banbury type internal mixer, preferably with intermeshing rotors
   1) at least one cross-linkable diene rubber (A),
   2) at least one coupling agent (B),
   3) at least one cross-linking activator (E) and
   4) at least one filler (G) and optionally further additives
      at temperatures from 140°C to about 200°C over a period of 1 to 20 minutes, preferably 150°C to 180°C over a period of about 2 to 10 minutes;
      thereby forming first mixture; (non-productive mixture), which preferably will be stored at a temperature between 15 to 40°C for 5 to 48 hours, preferably 20 to 30 hours,
II) mixing the first mixture (I) at a temperature of from about 100°C - 200°C, preferably 140°C-170°C for a period of from about 1 to 10 minutes; preferably 3 to 6 minutes, which preferably will be stored at a temperature between 15 to 40°C for 5 to 48 hours, preferably 20 to 30 hours,
III) mixing at a temperature of from about 20 to 140°C, preferably 50 to 100°C and adding at least one cross-linking agent (C), at least one accelerator (D) and at least a composition according to invention (F) and
IV) shaping the mixture.

To proceed by cross-linking this mixture will be heated up to temperature between about 130°C to about 200°C for a period of from about 5 to about 60 minutes.

The present invention also relates to the use of a rubber mixture according to the invention in automotive applications, especially to reduce the Mooney viscosity, extend the incubation time and improve the reinforcement factor.

The scope of the invention encompasses all of the definitions of radicals, indices, parameters and explanations stated generally or in preferred ranges above and in the following taken together, thus also between the respective ranges and preferred ranges in any combination.

The present invention is described in more detail by reference to the following examples, without being limited to them.

### Examples:

The following materials have been used:
NR = SMR 10 natural rubber from Weber & Schaer GmbH & Co. KG, Standard Malaysian Rubber with Mooney viscosity between 70 and 90 MU and dirt content below 0,08%.
SBR = PBR 4041 solution styrene-butadiene rubber with a styrene content of 25% from Lanxess Deutschland GmbH.
BR = Buna CB 24 solution high-cis (min. 96%) polybutadiene rubber from Lanxess Deutschland GmbH.
Silica = Ultrasil® GR7000 from Evonik.
CB N330 = carbon black from Orion Engineered Carbons.
Sulfur = ground sulfur from Solvay Barium Strontium GmbH.
Zinc oxide WS = zinc oxide White Seal from Grillo GmbH.
Stearic acid = stearic acid flakes from Avokal GmbH.
CBS = N-cyclohexyl-2-benzothiazolesulphenamide (CBS) from Lanxess Deutschland GmbH.
Si 363 = mercaptosilanes according to formula (r) from Evonik Degussa AG.
NXT Z100 = according to formula (p) from Momentive Performance Materials.
CLD = Rhenocure® S from Rhein Chemie Rheinau GmbH according to formula (I) with z = 2.
CTP = Component according to formula (II) with X= N-S-R and R = cycloalkyl from Lanxess Deutschland GmbH.
Vulkalent® B/C= component to formula (II) with X= O from Lanxess Deutschland GmbH.
Vulkalent® E/C = Component according to formula (II) with X= N-S-R and R = C(Cl)₃ from Lanxess Deutschland GmbH.
6PPD = N-(1,3-dimethylbutyl)-N'-phenyl-p-phenylenediamine from Lanxess Deutschland GmbH.
TMQ = poly(2,2,4-trimethyl-1,2-dihydroquinoline) from Lanxess Deutschland GmbH.
Plasticizer = VivaTec 500 from Hansen und Rosenthal AG.

### Preparation of the compounds:

The compounds for **Example 1** were mixed in a 300 cm³ internal mixer from Haake with Banbury type tangential rotors. The process occurred at 40°C and took 12 min. The rotor speed was set at 50 rpm.

For preparing the mixtures R1- R3 and E 1 to E18 the ingredients as mentioned in in Table 1, Table 2 and Table 3, were mixed in one stage and added in the following order: Firstly the rubber (either NR of SBR or BR) was homogenized for two minutes then the mercaptosilane (Si 363) was added and mixed for another 2 minutes. Secondly zinc oxide and stearic acid were added and mixed for two minutes. Lastly sulfur, CBS and either CLD or CTP or Vulkalent® B/C or Vulkalent® E/C or combinations of CLD and CTP or CLD with Vulkalent® B/C or Vulkalent® E/C (according to the invention) were added. If the combinations according to the invention were added (recipes E4 - E6, E10 - E12 and E16 - E18) they were mixed previously in a flask. Finally the mixture was dumped and samples were taken for rheological testing as described later.

The compounds for **Example 2** were mixed in a 1500 cm³ internal mixer from Werner&Pfleiderer with intermeshing rotors. The mixing of the ingredients in Table 5 took place in 2 stages. The first stage occurred at 100°C with 80 rpm for up to 12 minutes. The ingredients were added in the following order: firstly the NR was homogenized for 2 minutes. Subsequently 6PPD and TMQ were added and mixed for one minute. Afterwards silica, Si363, zinc oxide and plasticizer were added. The mixing was carried on for up to 12 minutes. If the temperature reached 150°C the rpm was reduced to keep it constant. After 12 minutes the mixture is dumped, processed on the 2 roll mill for 3 minutes and stored for 24 hours at room temperature.

For stage 2 the mixture from stage 1 was homogenized in the same internal mixer for one minute after which sulfur, CBS and the combinations according to the invention (in recipes E21 and E22) were added. The combinations according to the invention were mixed previously in a flask. Finally the mixture was dumped and samples were taken for rheological testing as described later.

For physical testing the mixture was compression molded in a press at 200 bar and 160°C. The vulcanization time was determined by using the T90 parameter from the rheometer curve multiplied by 1,5.

The compounds for **Example 3** were mixed in a 1500 cm³ internal mixer from Werner&Pfleiderer with intermeshing rotors. The mixing of the ingredients in mentioned in Table 8 took place in 3 stages. The first stage occurred at 80°C with 70rpm for 5 minutes. The ingredients were added in the following order: firstly the SBR and BR were homogenized for 1 minute. Subsequently, 6PPD and TMQ were added and mixed for 30 seconds. Afterwards silica, Si363 or NXT Z 100, zinc oxide, stearic acid, CB N330 and plasticizer were added. If the temperature reached 140°C the rpm was reduced to keep it constant. After 5 minutes the mixture is dumped, processed on the 2 roll mill for 3 minutes and stored for 24 hours at room temperature.

In stage 2 the mixture from stage one is added into the same internal mixer and mixed for 3 minutes with 70 rpm. The starting temperature was 80°C. After 3 minutes the mixture is dumped, processed on the 2 roll mill for 3 minutes and stored for 24 hours at room temperature.

For stage 3 the mixture from stage 2 was homogenized in the same internal mixer for one minute after which sulfur, CBS and the combinations according to the invention (in recipes E21-E24) were added. The combinations according to the invention were mixed previously in a flask. Finally the mixture was dumped and samples were taken for rheological testing as described later.

For physical testing the mixture was compression molded in a press at 200 bar and 160°C. The vulcanization time was determined by using the T90 parameter from the rheometer curve multiplied by 1,5.

### Testing

The mixtures in Example 1 were tested rheologically by the appropriate procedures as follows: Mooney viscosity (ML(1+4)100°C) and scorch - ASTM D1646. Crosslinking characteristics, i.e. incubation time and Fₘₐₓ-Fₘᵢₙ - DIN 53529 using a Rheometer MDR 2000.

The mixtures in Examples 2 and 3 were tested rheologically similar to Example 1. Furthermore, the physical properties of compression molded samples were tested according to DIN 53504 (elongation at break (EAB), tensile strength and reinforcement factor). The reinforcement factor is a value typically used to characterize filled rubber mixtures and it is calculated by dividing the tensile modulus value at 300% elongation by the value at 100% elongation.

### Example 1 - Unfilled compounds

**Table 1: Unfilled NR compounds**

| | Amount [phr] | | | | | | |
|---|---|---|---|---|---|---|---|
| Ingredient | R1 | E1 | E2 | E3 | E4 | E5 | E6 |
| NR | 100 | 100 | 100 | 100 | 100 | 100 | 100 |
| Si 363 | 10 | 10 | 10 | 10 | 10 | 10 | 10 |
| Sulfur | 2,1 | 2,1 | 2,1 | 2,1 | 2,1 | 2,1 | 2,1 |
| Zinc oxide WS | 2 | 2 | 2 | 2 | 2 | 2 | 2 |
| CBS | 1,6 | 1,6 | 1,6 | 1,6 | 1,6 | 1,6 | 1,6 |
| Stearic acid | 1 | 1 | 1 | 1 | 1 | 1 | 1 |
| CLD | | | | | 1 | 1 | 1 |
| CTP | | 1 | | | 1 | | |
| Vulkalent^{®} B/C | | | 1 | | | 1 | |
| Vulkalent^{®}E/C | | | | 1 | | | 1 |

| | | | | | | | |
|---|---|---|---|---|---|---|---|
| **E4 - E6 = according to the invention, R = reference** | | | | | | | |

**Table 2: Unfilled SBR compounds**

| | Amount [phr] | | | | | | |
|---|---|---|---|---|---|---|---|
| Ingredient | R2 | E7 | E8 | E9 | E10 | E11 | E12 |
| SBR | 100 | 100 | 100 | 100 | 100 | 100 | 100 |
| Si 363 | 10 | 10 | 10 | 10 | 10 | 10 | 10 |
| Sulfur | 2,1 | 2,1 | 2,1 | 2,1 | 2,1 | 2,1 | 2,1 |
| Zinc oxide WS | 2 | 2 | 2 | 2 | 2 | 2 | 2 |
| CBS | 1,6 | 1,6 | 1,6 | 1,6 | 1,6 | 1,6 | 1,6 |
| Stearic acid | 1 | 1 | 1 | 1 | 1 | 1 | 1 |
| CLD | | | | | 1 | 1 | 1 |
| CTP | | 1 | | | 1 | | |
| Vulkalent^{®} B/C | | | 1 | | | 1 | |
| Vulkalent^{®}E/C | | | | 1 | | | 1 |

| | | | | | | | |
|---|---|---|---|---|---|---|---|
| **E10 - E12 = according to the invention, R = reference** | | | | | | | |

**Table 3: Unfilled BR compounds**

| | Amount [phr] | | | | | | |
|---|---|---|---|---|---|---|---|
| Ingredient | R3 | E13 | E14 | E15 | E16 | E17 | E18 |
| BR | 100 | 100 | 100 | 100 | 100 | 100 | 100 |
| Si 363 | 10 | 10 | 10 | 10 | 10 | 10 | 10 |
| Sulfur | 2,1 | 2,1 | 2,1 | 2,1 | 2,1 | 2,1 | 2,1 |
| Zinc oxide WS | 2 | 2 | 2 | 2 | 2 | 2 | 2 |
| CBS | 1,6 | 1,6 | 1,6 | 1,6 | 1,6 | 1,6 | 1,6 |
| Stearic acid | 1 | 1 | 1 | 1 | 1 | 1 | 1 |
| CLD | | | | | 1 | 1 | 1 |
| CTP | | 1 | | | 1 | | |
| Vulkalent^{®} B/C | | | 1 | | | 1 | |
| Vulkalent^{®}E/C | | | | 1 | | | 1 |

| | | | | | | | |
|---|---|---|---|---|---|---|---|
| **E16 - E18 = according to the invention, R = reference** | | | | | | | |

**Table 4: Results for the unfilled rubbers**

| Recipe | ML(1+4) 100°C [MU] | Scorch 125°C [min] | | Incubation time 160°C [min] | Fₘₐₓ - Fₘᵢₙ 160°C [dNm] |
|---|---|---|---|---|---|
| | | TS 5 | TS 35 | | |
| R1 | 42 | 2,2 | 3,1 | 0,4 | 6,1 |
| E1 | 35 | 4,9 | 6,2 | 1,0 | 6,0 |
| E2 | 39 | 3,2 | 4,5 | 0,6 | 5,4 |
| E3 | 32 | 7,8 | 9,6 | 1,4 | 6,1 |
| E4 | 29 | 15,4 | 20,1 | 2,9 | 6,8 |
| E5 | 30 | 8,2 | 10,5 | 1,5 | 6,5 |
| E6 | 28 | 14,9 | 19,8 | 3,1 | 6,5 |
| R2 | 43 | 4,7 | 6,1 | 1,5 | 6,1 |
| E7 | 40 | 11,1 | 14,3 | 2,9 | 5,5 |
| E8 | 39 | 20,9 | 31,9 | 3,5 | 5,8 |
| E9 | 36 | 20,5 | 31,7 | 3,8 | 7,0 |
| E10 | 38 | 51,6 | n.v. | 8,4 | 6,2 |
| E11 | 38 | 38,0 | 55,5 | 7,2 | 7,1 |
| E12 | 34 | 27,1 | 37,3 | 4,4 | 7,9 |
| R3 | 46 | 2,1 | 2,9 | 0,5 | 10,7 |
| E13 | 32 | 23,1 | 26,5 | 3,4 | 10,6 |
| E14 | 31 | 7,8 | 12,4 | 1,9 | 9,6 |
| E15 | 24 | 18,4 | 31,7 | 3,1 | 13,2 |
| E16 | 31 | 25,7 | 36,2 | 4,1 | 11,8 |
| E17 | 30 | 17,3 | 30,3 | 3,2 | 11,1 |
| E18 | 23 | 18,0 | 28,7 | 3,7 | 13,5 |

| | | | | | |
|---|---|---|---|---|---|
| **E4 - E6, E10 - E12 and E16 - E18 = according to the invention, R = reference, n.v. = no value** | | | | | |

### Example 2: Filled NR-compounds

**Table 5: Filled NR - Si363 compounds**

| | Amount [phr] | | |
|---|---|---|---|
| Ingredient | R4 | E19 | E20 |
| NR | 100 | 100 | 100 |
| Silica | 52 | 52 | 52 |
| Si 363 | 5,2 | 5,2 | 5,2 |
| Plasticizer | 8 | 8 | 8 |
| Zinc oxide WS | 3 | 3 | 3 |
| Sulfur | 2,1 | 2,1 | 2,1 |
| 6PPD | 2 | 2 | 2 |
| CBS | 1,6 | 1,6 | 1,6 |
| TMQ | 1,5 | 1,5 | 1,5 |
| Stearic acid | 1 | 1 | 1 |
| CLD | | 1 | 1 |
| CTP | | | 1 |
| Vulkalent^{®}E/C | | 1 | |

| | | | |
|---|---|---|---|
| **E19 - E20 = according to the invention, R = reference** | | | |

**Table 6: Rheological data filled NR - compounds**

| Recipe | ML(1+4) 100°C [MU] | Scorch 125°C [min] | | Incubation time 160°C [min] | Fₘₐₓ - Fₘᵢₙ 160°C [dNm] |
|---|---|---|---|---|---|
| | | TS 5 | TS 35 | | |
| R4 | 33 | 14,6 | 20,5 | 2,3 | 11,5 |
| E19 | 30 | 30,6 | 51 | 4,9 | 12,6 |
| E20 | 29 | 40 | n.v. | 6,0 | 12 |

| | | | | | |
|---|---|---|---|---|---|
| **E19 - E20 = according to the invention, R = reference, n.v. = no value** | | | | | |

**Table 7: Physical properties of filled NR - compounds**

| Recipe | EAB [%] | Tensile Strength [MPa] | Reinforcement factor |
|---|---|---|---|
| R4 | 501 | 19,9 | 4,9 |
| E19 | 473 | 18,8 | 4,8 |
| E20 | 523 | 21,5 | 5,0 |

| | | | |
|---|---|---|---|
| **E19 - E20 = according to the invention, R = reference** | | | |

### Example 3: Filled SBR:BR compounds

**Table 8: Filled SBR:BR - compounds**

| | Amount [phr] | | | | | |
|---|---|---|---|---|---|---|
| Ingredient | R5 | E21 | E22 | R6 | E23 | E24 |
| Silica | 90 | 90 | 90 | 90 | 90 | 90 |
| SBR | 70 | 70 | 70 | 70 | 70 | 70 |
| Plasticizer | 35 | 35 | 35 | 35 | 35 | 35 |
| BR | 30 | 30 | 30 | 30 | 30 | 30 |
| Si 363 | | | | 10 | 10 | 10 |
| NXT Z 100 | 7,2 | 7,2 | 7,2 | | | |
| CB N 330 | 5 | 5 | 5 | 5 | 5 | 5 |
| Sulfur | 2,1 | 2,1 | 2,1 | 2,1 | 2,1 | 2,1 |
| Zinc oxide WS | 2 | 2 | 2 | 2 | 2 | 2 |
| 6PPD | 2 | 2 | 2 | 2 | 2 | 2 |
| CBS | 1,6 | 1,6 | 1,6 | 1,6 | 1,6 | 1,6 |
| TMQ | 1,5 | 1,5 | 1,5 | 1,5 | 1,5 | 1,5 |
| Stearic acid | 1 | 1 | 1 | 1 | 1 | 1 |
| CLD | | 1 | 1 | | 1 | 1 |
| CTP | | | 1 | | | 1 |
| Vulkalent^{®}B/C | | 1 | | | 1 | |

| | | | | | | |
|---|---|---|---|---|---|---|
| **E21 - E22, E23 - E24 = according to the invention, R = reference** | | | | | | |

**Table 9: Rheological data of filled SBR/BR - compounds**

| Recipe | ML(1+4) 100°C [MU] | Scorch 125°C [min] | | Incubation time 160°C [min] | Fₘₐₓ - Fₘᵢₙ 160°C [dNm] |
|---|---|---|---|---|---|
| | | TS 5 | TS 35 | | |
| R5 | 57 | 2,7 | 3,6 | 0,8 | 12,7 |
| E21 | 52 | 10,2 | 14,1 | 2,4 | 15,2 |
| E22 | 51 | 18,7 | 24,2 | 3,8 | 13,7 |
| R6 | 47 | 7,5 | 10,2 | 1,9 | 17,1 |
| E23 | 48 | 26,8 | 32,0 | 3,93 | 18,5 |
| E24 | 44 | 38,2 | 46,9 | 4,2 | 15,6 |

| | | | | | |
|---|---|---|---|---|---|
| **E21 - E22, E23 - E24 = according to the invention, R = reference, n.v. = no value** | | | | | |

**Table 10: Physical properties filled SBR/BR - compounds**

| Recipe | EAB [%] | Tensile Strength [MPa] | Reinforcement factor |
|---|---|---|---|
| R5 | 301 | 301 | n.v. |
| E21 | 259 | 265 | n.v. |
| E22 | 265 | 279 | n.v. |
| R6 | 384 | 16,0 | 4,8 |
| E23 | 336 | 15,9 | 5,2 |
| E24 | 377 | 16,8 | 6,0 |

| | | | |
|---|---|---|---|
| **E21 - E22, E23 - E24 = according to the invention, R = reference, n.v. = no value** | | | |

### Results and discussion

In Table 4, Table 6, Table 9 the rheological evaluation of the mixtures in examples 1, 2 and 3 are summarized. Table 7 and Table 10 show results which were measured on the compression molded samples as described above.

Example 1 is an array of mixtures using three commonly used rubbers (NR, SBR and BR) without filler for the sole purpose of illustrating the possible course of action in tackling the problem of the reduced incubation time due to the presence of mercaptosilane (Si363). Typically a retarder is used but the effect is not strong enough and an increase of its concentration would impair the physical properties. It is clearly demonstrated by the results in Table 4 that only the combination of a retarder according to formula II) with CLD (E4 - E6, E10 - E12 and E16 - E18) bring about concomitantly the reduction of the Mooney viscosity by up to 50%, the increase of the incubation times up to 8 times and the improvement of the characteristic cross link density quantified by the Fₘₐₓ-Fₘᵢₙ parameter.

The formulations R4, R5 and R6 shown in Example 2 (Table 5) and Example 3 (Table 8) are of typical compounds that may be found in applications, such as truck and passenger car tire treads. The use of mercaptosilanes in these formulations is relevant to the final product properties. But their use of such mercaptosilanes is limited by their high reactivity.

The rheological data in Table 6 and in Table 9 clearly demonstrate that the compositions according to the invention (E19-E24) reduce the Mooney viscosity of the final product thereby greatly contributing to the reduction of the energy input necessary for further processing. Furthermore it is seen that the incubation time is extended 2 to 4 times when compared to reference which means more time in the critical phase of shape giving.

Finally from Table 7 and Table 10 it can clearly be stated that the aforementioned improvements can be achieved using the compositions according to the invention (E19-E24), as they also reflect on the physical properties of the end product and mostly improve them. The addition of mercaptosilanes to test recipes (R1 to R6) has decreased the incubation time and increased the Mooney viscosity of the mixture thereby negatively affecting the processing window and the energy input. The examples E1-E3, E10-E12 and E13-E15 show that the addition of a single retarder brings about only moderate changes of the incubation time. Only by adding compositions according to the invention F) clear improvements can be noticed as demonstrated by examples. Furthermore, by using compounds F) (see examples E19-E24) the good physical properties induced by mercaptosilanes in silica filled compounds are retained while giving more processing time and possibly reducing the mixing energy input.

## Claims

1. Composition comprising at least one dicaprolactam polysulfide according to formula (1) 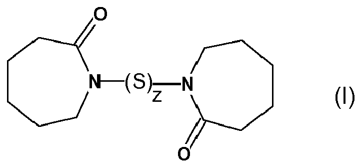 with z = 2-8, preferably 2,
and at least one component according to formula (II) 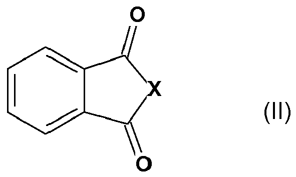 wherein X= O or N-S-R and R represents an C₁-C₆-alkyl-, C₆-C₁₂-cycloalkyl-residues or -C(H)ₙYₘ with the proviso that n+m = 3, wherein Y = F, Cl or Br preferably Cl, or C₁ - C₆- alkyl.

2. Composition according to claim 1, **characterized in that** the dicaprolactamepolysulfide (CLD) according to formula (I) is

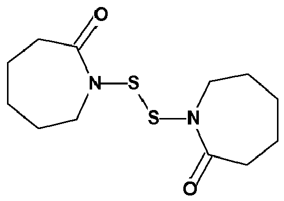

3. Composition according to claim 1 or 2, **characterized in that** in the component according to formula (II) with X= O or X= N-S-R and R represent cycloalkyl or -C(Cl)₃.

4. Composition according to any of the preceding claims, **characterized in that** in the ratio of dicaprolactamepolysulfide to component according to formula (II) is 10: 1 to 1 : 10, preferably 1:1.

5. Composition according to any of the preceding claims, **characterized in that** they are bound on a polymer (polymer-bound) or applied on a carrier (carrier-based composition).

6. Rubber mixture containing at least
- A cross-linkable diene rubber, preferably sulfur vulcanizable rubber (A),
- Coupling agent (B)
- Cross-linking agent (C)
- Accelerator (D)
- Cross-linking activators (E) and
- F) a composition according to the claims 1 to 4.

7. Rubber mixture according to claim 6, **characterized in that** it contains silica as filler (G).

8. Rubber mixture according to claim 6 or 7, **characterized in that** natural rubber (NR), isoprene rubber (IR), styrene-butadiene rubber (SBR), butadiene rubber (BR), isoprene-isobutylene rubber (IIR) and/or ethylene-propylene-diene rubber (EPDM) and/or blends thereof, preferably styrene-butadiene rubber (SBR) and/or natural rubber (NR), is used as cross-linkable diene rubber (A).

9. Rubber mixture according to any of the claim 6 to 8, **characterized in that** mercaptosilanes are used as coupling agent (B).

10. Rubber mixture according to any of the claim 6 to 9, **characterized in that** sulphur is used as a cross-linking agent (C).

11. Rubber mixture according to any of the claim 6 to 10, **characterized in that** sulphenamide based substances, preferably benzothiazolesulphenamides, especially preferred N-cyclohexyl-2-benzothiazolesulphenamide (CBS), are used as accelerators (D).

12. Rubber mixture according to any of the claim 6 to 11, **characterized in that** zinc oxide and stearic acid are used as cross-linking activators (E).

13. Rubber mixture according to any of the claim 6 to 12, **characterized in that** it contains
1 - 15 phr coupling agent (B),
0,5 - 5 phr cross-linking agent (C),
0,1 - 5 phr accelerator (D),
1 - 10 phr cross-linking activators (E) and
0,1 to 5 phr of a mixture of least one dicaprolactamepolysulfide according to formula (I) and at least one component according to formula (II) (F),
based on 100 phr cross-linkable diene rubber (A).

14. Process for the production of a rubber mixture according to any of the claim 6 to 13, **characterized in that** the coupling agent (B) and the cross-linking activator (E) are mixed into the cross-linkable diene rubber (A), and at least one cross-linking agent (C), at least one accelerator (D) and at least a composition (F) are added subsequently preferably by using a Banbury type internal mixer, more preferred at temperatures between 30 to 90 °C, most preferred at temperatures between 50 and 70°C.

15. Use of a rubber mixture according to any of the claim 6 to 13 for in automotive applications, especially to improve scorch-resistance and the physical properties in tires such as elongation at break, tensile strength and the reinforcement factor.
